# EUROPÄISCHE PATENTSCHRIFT

(11) **EP 2 048 377 B1**
(45) Veröffentlichungstag und Bekanntmachung des Hinweises auf die Patenterteilung: **23.05.2012**
(21) Anmeldenummer: 08014486.8
(22) Anmeldetag: 14.08.2008
(51) Int. Cl.: F16B 5/06

(54) **Vorrichtung zum Befestigen eines Anbauteiles an einem Trägerteil**
Device for securing a construction element to a carrier section
Dispositif de fixation d'une pièce rapportée à un élément de support

(30) Priorität: 04.10.2007 DE 102007047535
(43) Veröffentlichungstag der Anmeldung: 15.04.2009
(73) Patentinhaber: A. Raymond et Cie., 38000 Grenoble (FR)
(72) Erfinder: Hauser, Ingo, 79400 Kandern (DE)
(74) Vertreter: Rüttgers, Joachim

(56) Entgegenhaltungen:
- EP-A2- 1 832 760
- DE-A1- 19 705 749
- FR-A1- 2 815 681
- US-A1- 2004 016 088
- US-A1- 2004 265 094

## Beschreibung

Die Erfindung betrifft eine Vorrichtung gemäß dem Oberbegriff des Patentanspruches 1.

Eine derartige Vorrichtung ist aus US 2004/0016088 A1 bekannt. Bei dieser vorbekannten Vorrichtung zum Befestigen eines Anbauteiles an einem Trägerteil ist ein Einsteckteil mit einem Einsteckschaft vorhanden, an dem Arretiermittel zum Fixieren des Einsteckteiles an dem Trägerteil ausgebildet sind. Weiterhin weist sie einen Kopfschaft auf, der mit dem Einsteckschaft verbunden ist und über einen Kopfabschluss sowie über eine Gegenplatte verfügt, zwischen denen eine Eingriffsanordnung ausgebildet ist. Darüber hinaus ist ein bei der gattungsgemäßen Vorrichtung fest an einem Anbauteil anzubringendes Verschiebeteil vorhanden, das mit einer Blockieranordnung ausgebildet ist, die in einer Verriegelungsstellung mit der Eingriffsanordnung in Eingriff bringbar ist, um das Anbauteil mit einem das Einsteckteil aufnehmenden Trägerteil zu verbinden.

Aus FR 2 815 681 A1 ist eine Vorrichtung zum Befestigen eines Anbauteiles an einem Trägerteil bekannt, die über Einsteckteil mit einem Einsteckschaft verfügt, an dem Arretiermittel zum Fixieren des Einsteckteiles an dem Trägerteil ausgebildet sind. Weiterhin weist sie einen Kopfschaft auf, der mit dem Einsteckschaft verbunden ist und über einen Kopfabschluss sowie über eine Gegenplatte verfügt, zwischen denen eine Eingriffsanordnung ausgebildet ist. Darüber hinaus ist bei dieser vorbekannten Vorrichtung ein loses, mit einer mittigen Ausnehmung ausgebildetes Verschiebeteil vorhanden, das mit einer als Verkrallkragen ausgebildeten Blockieranordnung ausgebildet ist, die in einer Verriegelungsstellung mit der Eingriffsanordnung und mit einem an einem Anbauteil ausgebildeten Zapfen in Eingriff bringbar ist, um das Anbauteil mit einem das Einsteckteil aufnehmenden Trägerteil zu verbinden.

Eine weitere Vorrichtung zum Befestigen eines Anbauteiles an einem Trägerteil ist aus DE 199 63 721 A1 bekannt. Bei dieser Vorrichtung zum Befestigen eines Anbauteiles an einem Trägerteil ist ein Einsteckteil vorhanden, das einen Einsteckschaft aufweist, an dem Arretiermittel in Gestalt von beidseitig eines Mittelsteges angeordneten und in einem Fußbereich an den Mittelsteg angeformten Federarmen zum Fixieren des Einsteckteiles an dem Trägerteil ausgebildet sind, und das einen Kopfschaft ausweist, der mit dem Einsteckschaft verbunden ist und über eine Kopfplatte sowie über eine Gegenplatte verfügt, zwischen denen eine Eingriffsanordnung ausgebildet ist. Mit der Eingriffsanordnung steht ein gegenüber dem Einsteckteil seitlich verschiebbares Kopfteil nach einem erstmaligen Verrasten unlösbar in Eingriff, an dem wiederum im wesentlichen spielfrei ein Anbauteil über eine lösbare Schnappverbindung befestigbar ist. Dadurch lässt sich das Anbauteil mit einer gewissen Toleranz an dem Trägerteil befestigen.

Der Erfindung liegt die Aufgabe zugrunde, eine Vorrichtung der eingangs genannten Art anzugeben, mit der sich bei einer einfachen Handhabung das Anbauteil mit einer hohen Festigkeit an dem Trägerteil befestigen lässt.

Diese Aufgabe wird bei einer Vorrichtung der eingangs genannten Art erfindungsgemäß mit den kennzeichnenden Merkmalen des Patentanspruches 1 gelöst.

Dadurch, dass bei der erfindungsgemäßen Vorrichtung das Verschiebeteil in einer Führungsausnehmung eines an der Gegenplatte angeformten Führungssteges verschiebbar gelagert ist, lässt sich die Vorrichtung einstückig handhaben und mittels der Blockieranordnung in einer Verriegelungsstellung mit der Eingriffsanordnung in Eingriff bringen, so dass sich bei einer entsprechenden Ausgestaltung des Anbauteiles das Anbauteil mit der erfindungsgemäßen Vorrichtung verriegeln und bis auf zerstörende Krafteinwirkungen das Anbauteil mit einer äußerst hohen Festigkeit mit dem Trägerteil verbinden lässt.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbei- spiel einer erfindungsgemäßen Vorrichtung mit einem Einsteckteil und mit einem Verschiebeteil in einer rück- gezogenen Stellung,
- Fig. 2: in einer Schnittansicht das Ausführungsbeispiel gemäß Fig. 1 im Verbund mit einem Anbauteil mit dem Ver- schiebeteil in einer vorgeschobenen Verriegelungsstel- lung und
- Fig. 3: in einer gegenüber der Darstellung von Fig. 2 um 90 Grad gedrehten Schnittansicht das Ausführungsbeispiel gemäß Fig. 1 in der Anordnung gemäß Fig. 2 mit dem Einsteckteil in einer Eingriffsstellung mit einem Trägerteil.

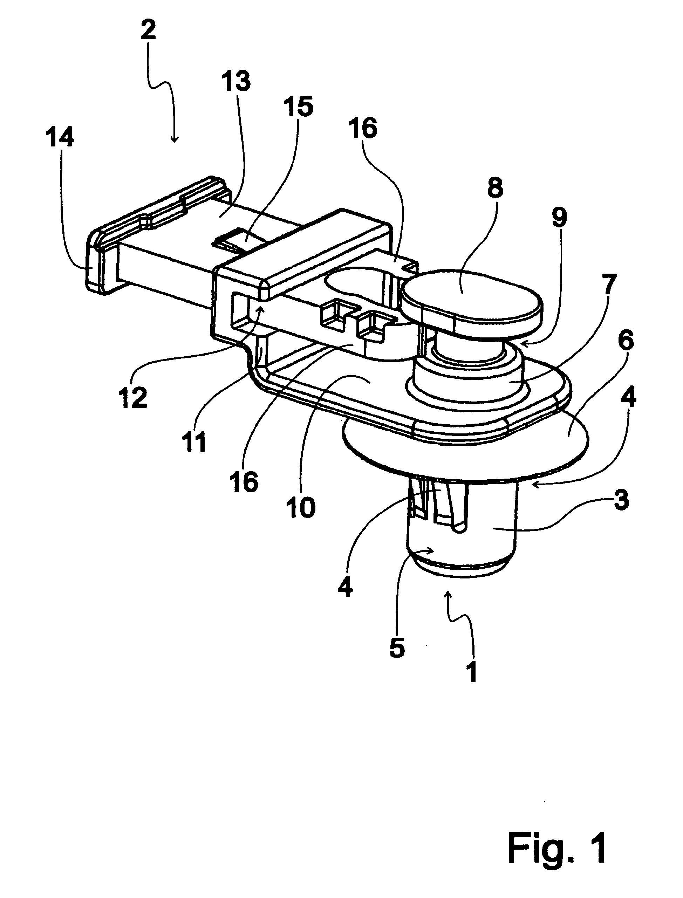

Fig. 1 zeigt in einer perspektivischen Ansicht ein aus einem hartelastischen Kunststoffmaterial hergestelltes Ausführungsbeispiel einer erfindungsgemäßen Vorrichtung, die über ein Einsteckteil 1 und über ein Verschiebeteil 2 verfügt. Das Einsteckteil 1 ist mit einem zylinderförmigen Einsteckschaft 3 ausgestattet, an dem bei diesem Ausführungsbeispiel zwei einander diametral gegenüberliegende Federzungen 4 als Arretiermittel ausgebildet sind. Jede Federzunge 4 ist in einem Fußbereich 5 des Einsteckschaftes 3 angebunden und steht von dem Fußbereich 5 schräg wegweisend radial über den Einsteckschaft 3 vor. Auf der dem Fußbereich 5 gegenüberliegenden Seite des Einsteckschaftes 3 verfügt das Einsteckteil 1 über einen Abdeckschirm 6, der den Einsteckschaft 3 radial überkragt und in Richtung des Fußbereiches 5 des Einsteckschaftes 3 gewölbt ist.

Auf der dem Einsteckschaft 3 gegenüberliegenden Seite des Abdeckschirmes 6 weist das Einsteckteil 1 einen Kopfschaft 7 auf, der an seinem dem Abdeckschirm 6 abgewandten Ende als Kopfabschluss eine Kopfplatte 8 trägt, die eine an sie angrenzende, in den Kopfschaft 7 eingebrachte Ringnut 9 als Eingriffsanordnung endseitig begrenzt. Der Kopfplatte 8 gegenüberliegend ist eine Gegenplatte 10 ausgebildet, die sich von den Kopfschaft 7 wegweisend über den Abdeckschirm 6 hinaus radial nach außen erstreckt. An dem dem Kopfschaft 7 abgewandten Ende der Gegenplatte 10 ist ein im wesentlichen rechtwinklig zu der Gegenplatte 10 ausgerichteter, sich auf die dem Kopfschaft 7 zugewandten Seite der Gegenplatte 10 erstreckender Führungssteg 11 angeformt, in dem eine rechteckförmige Führungsausnehmung 12 ausgebildet ist, deren lange Seite in einem Abstand von sowie parallel zu der Gegenplatte 10 ausgerichtet und in die in der Darstellung gemäß Fig. 1 das Verschiebeteil 2 eingefügt sowie verschiebbar gelagert ist.

Bei dem Ausführungsbeispiel gemäß Fig. 1 weist das Verschiebeteil 2 eine durch die Führungsausnehmung 12 durchgreifende Führungsplatte 13 auf, die mit einem den Dimensionen der der Führungsausnehmung 12 entsprechenden Querschnitt ausgebildet ist und an einem Ende, das in der Darstellung gemäß Fig. 1 dem Einsteckteil 1 abgewandt ist, eine Endplatte 14 trägt, die wenigstens abschnittsweise über die Führungsplatte 13 übersteht. Auf einer Flachseite der Führungsplatte 13 ist als Verriegelungsstruktur eine vorstehende Verriegelungsnase 15 vorhanden, die auf der der Endplatte 14 zugewandten Seite steil und auf der der Endplatte 14 abgewandten Seite verhältnismäßig flach angestellt ist, so dass bei Verschieben des Verschiebeteiles 2 in Richtung des Einsteckteiles 1 die Verriegelungsnase 15 mit einem verhältnismäßig geringen Einschiebewiderstand durch die Führungsausnehmung 12 durchtreten kann, das Verschiebeteil 2 jedoch nach Hintergreifen des Führungssteges 11 durch die Verriegelungsnase 15 nur mit einem wesentlich höheren Auszugswiderstand wieder in eine Anordnung gebracht werden kann, in der die Verriegelungsnase 15 auf der dem Kopfschaft 7 abgewandten Seite des Führungssteges 11 angeordnet ist.

Weiterhin ist das Verschiebeteil 2 mit einer Blockieranordnung in Gestalt von gabelartig einander gegenüberliegenden Blockierarmen 16 ausgebildet, die an dem der Endplatte 14 gegenüberliegenden Ende der Führungsplatte 13 an der Führungsplatte 13 angeformt sind und sich in Verlängerung der Führungsplatte 13 erstrecken. Die Dimensionen der Blockierarme 16 und die Anordnung der Führungsausnehmung 12 sind so eingerichtet, dass bei Verschieben des Verschiebeteiles 2 in Richtung des Kopfschaftes 7 bis in eine vorgeschobene Blockierstellung die Blockierarme 16 in axialer Richtung im wesentlichen spielfrei in der Ringnut 9 liegen und die steile Seite der Verriegelungsnase 15 an der dem Kopfschaft 7 zugewandten Seite des Führungssteges 11 anliegt.

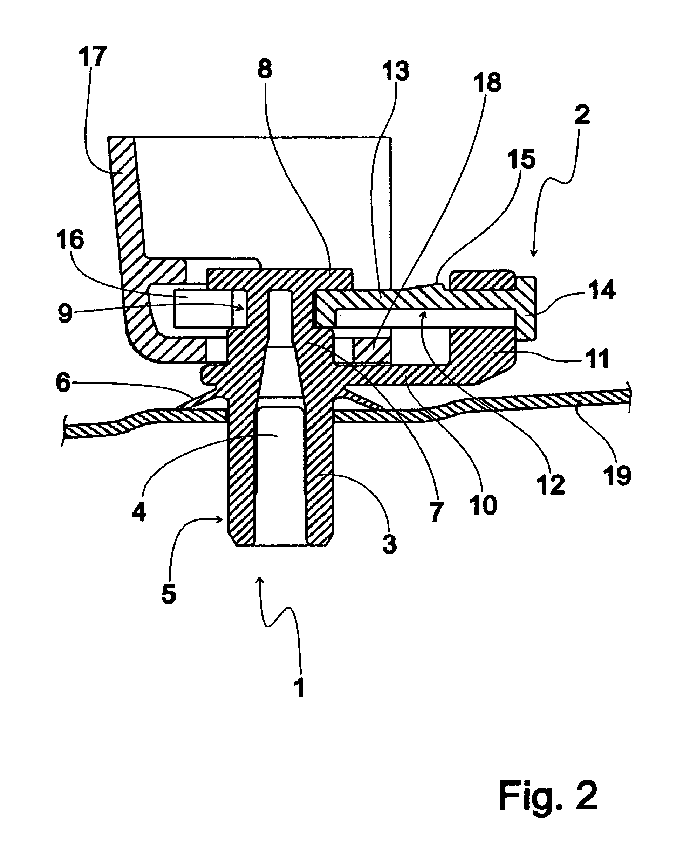

Fig. 2 zeigt in einer Schnittansicht das Ausführungsbeispiel gemäß Fig. 1 im Verbund mit einem als sogenannter "retainer" für eine Airbaghalterung ausgebildeten Anbauteil 17 mit dem Verschiebeteil 2 in der vorgeschobenen Verriegelungsstellung, in der zwischen der Gegenplatte 10 und der Führungsplatte 13 ein Quersteg 18 des Anbauteiles 17 angeordnet ist und die Blockierarme 16 unter bereichsweiser Überdeckung durch die Kopfplatte 8 in der Ringnut 9 angeordnet sind. Die Endplatte 14 liegt in der vorgeschobenen Verriegelungsstellung an der dem Kopfschaft 7 abgewandten Seite des Führungssteges 11 an, während die steile Seite der Verriegelungsnase 15 der dem Kopfschaft 7 zugewandten Seite des Führungssteges 11 gegenüberliegt ist. Dadurch ist das Anbauteil 17 fest mit der erfindungsgemäßen Vorrichtung verbunden, wobei diese Verbindung nur durch ein absichtliches Einwirken mit einem erheblichen Kraftaufwand auf das Verschiebeteil 2 zum Überwinden des Anschlags der steilen Seite der Verriegelungsnase 15 an den Führungssteg 11 bei einer Bewegung von dem Kopfschaft 7 weg lösbar ist. In dieser Anordnung ist das Anbauteil 17 mit einem beispielsweise als flache Trägerplatte ausgebildeten Trägerteil 19 verbindbar.

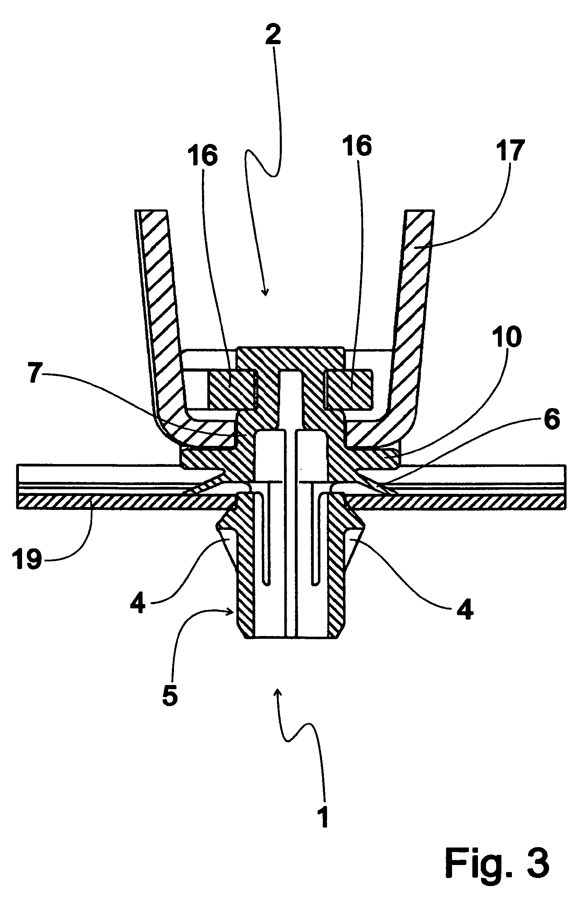

Fig. 3 zeigt in einer gegenüber der Darstellung von Fig. 2 um 90 Grad gedrehten Schnittansicht das Ausführungsbeispiel gemäß Fig. 1 in der Anordnung gemäß Fig. 2 mit dem Einsteckteil 1 in einer Eingriffsstellung mit dem Trägerteil 19. Aus Fig. 3 ist ersichtlich, dass in der Eingriffsstellung die Federzungen 4 den Rand einer in dem Trägerteil 19 ausgebildeten Ausnehmung hintergreifen und der Abdeckschirm 6 mit einer gewissen Vorspannung an der den Federzungen 4 gegenüberliegenden Seite des Trägerteiles 19 anliegt, so dass die erfindungsgemäße Vorrichtung und damit das an ihr angebrachte Anbauteil 17 fest und abgesehen von einem beabsichtigten Verschieben des Verschiebeteiles 2 aus der vorgeschobenen Verriegelungsstellung heraus bis auf eine den Quersteg 18 oder die Anordnung aus Einsteckteil 1 sowie Verschiebeteil 2 in der vorgeschobenen Blockierstellung zerstörende Kraftbeaufschlagung unlösbar mit dem Trägerteil 19 verbunden ist.

## Patentansprüche

1. Vorrichtung zum Befestigen eines Anbauteiles (17) an einem Trägerteil (19), die ein Einsteckteil (1) mit einem Einsteckschaft (3), an dem Arretiermittel (4) zum Fixieren des Einsteckteiles (1) an dem Trägerteil (19) ausgebildet sind, und mit einem Kopfschaft (7) aufweist, der mit dem Einsteckschaft (3) verbunden ist und über einen Kopfabschluss (8) sowie über eine Gegenplatte (10) verfügt, zwischen denen eine Eingriffsanordnung (9) ausgebildet ist, wobei ein Verschiebeteil (2) vorhanden ist, das mit einer Blockieranordnung (16) ausgebildet ist, die mit der Eingriffsanordnung (9) in einer Verriegelungsstellung in Eingriff bringbar ist, **dadurch gekennzeichnet, dass** an der Gegenplatte (10) in einem seitlichen Abstand von dem Kopfabschluss (8) ein Führungssteg (11) angeformt ist, der eine Führungsausnehmung (12) aufweist, die auf der dem Kopfschaft (7) zugewandten Seite in einem Abstand von der Gegenplatte (10) angeordnet ist, und dass das Verschiebeteil (2) in der Führungsausnehmung (12) in Richtung der Eingriffsanordnung (9) verschiebbar gelagert und durch die Blockieranordnung in der vorgeschobenen Verriegelungsstellung des Verschiebeteiles (2) mit der Eingriffsanordnung (9) im Eingriff ist.

2. Vorrichtung nach Anspruch 1, **dadurch gekennzeichnet, dass** an dem Verschiebeteil (2) eine Verriegelungsstruktur (15) ausgebildet ist, die in der Verriegelungsstellung eine Bewegung des Verschiebeteiles (2) von der Eingriffsstruktur (9) weg behindert.

3. Vorrichtung nach Anspruch 2, **dadurch gekennzeichnet, dass** die Eingriffsstruktur eine Ringnut (9) ist und dass die Blockieranordnung zwei gabelartig einander gegenüberliegende Blockierarme (16) aufweist, die in der Verriegelungsstellung in der Ringnut (9) angeordnet sind.

4. Vorrichtung nach Anspruch 3, **dadurch gekennzeichnet, dass** das Verschiebeteil (2) eine in der Führungsausnehmung (12) gelagerte quaderförmige flache Führungsplatte (13) aufweist, die mit ihrer Flachseite parallel zu der Gegenplatte (10) angeordnet ist und anderen einem Ende die Blockierarme (16) angeformt sind.

5. Vorrichtung nach Anspruch 4, **dadurch gekennzeichnet, dass** an dem den Blockierarmen (16) abgewandten Ende der Führungsplatte (13) eine wenigstens mit einem Abschnitt über die Führungsplatte (13) überstehende Endplatte (14) angeformt ist.

6. Vorrichtung nach Anspruch 5, **dadurch gekennzeichnet, dass** die Verriegelungsstruktur eine über die Führungsplatte (13) überstehende Verriegelungsnase (15) ist.

## Claims

1. Device for fastening an attachment element (17) to a support element (19), comprising an inserting element (1) having an inserting shaft (3) on which detent means (4) are provided for fixing the inserting element (1) to the support element (19) and having a head shaft (7) which is connected to the inserting shaft (3) and has a head termination (8) and a counter plate (10), between which an engaging apparatus (9) is formed, wherein a displacement element (2) is provided, which is provided with a blocking arrangement (16) which can be brought into engagement with the engaging apparatus (9) in a locking position, **characterised in that** a guide web (11) is formed at the counter plate (10) at a lateral separation from the head termination (8), said guide web having a guide recess (12) arranged at the side facing the head shaft (7) at a distance from the counter plate (10), and that the displacement element (2) is mounted in the guide recess (12) displaceable in the direction of the engaging apparatus (9) and, by means of the blocking arrangement, is in engagement, in the pushed-forward locking position of the displacement element (2), with the engaging apparatus (9).

2. Device according to claim 1, **characterised in that** a locking structure (15) which prevents movement of the displacement element (2) away from the engaging apparatus (9) in the locking position is provided at the displacement element (2).

3. Device according to claim 2, **characterised in that** the engaging apparatus is an annular groove (9) and that the blocking arrangement comprises two blocking arms (16) opposing one another in fork-like manner which, in the locking position, are arranged in the annular groove (9).

4. Device according to claim 3, **characterised in that** the displacement element (2) comprises a flat cuboid guide plate (13) mounted in the guide recess (12), said guide plate being arranged with the flat side thereof parallel to the counter plate (10), and having the blocking arms (16) formed onto one end thereof.

5. Device according to claim 4, **characterised in that**, formed at the end of the guide plate (13) facing away from the blocking arms (16), is an end plate (14) which projects with at least one portion thereof beyond the guide plate (13).

6. Device according to claim 5, **characterised in that** the locking structure is a locking lug (15) projecting beyond the guide plate (13).

## Revendications

1. Dispositif pour la fixation d'une pièce rapportée (17) sur un élément faisant office de portée d'assise (19), qui se compose d'un élément d'emmanchement (1) comportant une tige d'emmanchement (3) qui est munie de moyens d'immobilisation en position (4) pour fixer en position l'élément d'emmanchement (1) dans l'élément faisant office de portée d'assise (19) et comportant une tige formant tête (7), qui est reliée à la tige d'emmanchement (3) et qui est munie d'une portion terminale formant tête (8) ainsi que d'une contreplaque (10) entre lesquelles se trouve un dispositif de mise en prise d'engagement (9), ledit dispositif comportant un élément mobile formant poussoir (2) qui est muni d'un agencement de blocage en position (16) qui peut être déplacé en prise d'encastrement avec le dispositif de mise en prise d'engagement (9) dans une position de verrouillage, **caractérisé en ce qu'**à une certaine distance dans le plan latéral de la portion terminale formant tête (8) un segment de guidage (11) est réalisé solidaire par moulage, segment qui comporte un évidement de guidage (12) qui est disposé, à une certaine distance de la contreplaque (10), sur le côté orienté en direction de la tige formant tête (7), et **en ce que** l'élément mobile formant poussoir (2) est disposé dans l'évidement de guidage (12), avec la possibilité d'être déplacé dans la direction du dispositif de mise en prise d'engagement (9) et que, dans la position avancée de verrouillage de l'élément mobile formant poussoir (2), il est mis en prise d'encastrement avec le dispositif de mise en prise d'engagement (9) par l'agencement de blocage en position.

2. Dispositif selon la revendication 1, **caractérisé en ce qu'**il est prévu sur l'élément formant poussoir mobile (2) une structure de verrouillage (15) qui, dans la position de verrouillage du dispositif, empêche l'élément mobile formant poussoir (2) de se désolidariser du dispositif de mise en prise d'engagement (9).

3. Dispositif selon la revendication 2, **caractérisé en ce que** la structure de mise en prise d'engagement est constituée par une gorge annulaire (9) et **en ce que** l'agencement de blocage en position est muni de deux pattes de blocage (16) respectivement opposées selon une configuration en forme de chape

4. Dispositif selon la revendication 3, **caractérisé en ce que** l'élément mobile formant poussoir (2) comporte une plaquette de guidage plate de forme rectangulaire disposée dans l'évidement de guidage (12), dont la face plate est orientée parallèlement à la contreplaque (10) et à une extrémité de laquelle les pattes de blocage (16) sont réalisées solidaires par moulage.

5. Dispositif selon la revendication 4, **caractérisé en ce qu'**au niveau de l'extrémité de la plaquette de guidage (13) qui est orientée à l'opposé des pattes de blocage (16), une plaque d'extrémité (14) faisant saillie au moins sur une portion de celle-ci au-dessus de la plaquette de guidage (13) est réalisée solidaire par moulage.

6. Dispositif selon la revendication 6, **caractérisé en ce que** la structure de verrouillage consiste en un ergot de verrouillage (15) qui fait saillie au-dessus de la plaquette de guidage (13).
